# EUROPÄISCHE PATENTSCHRIFT

(11) **EP 3 214 512 B1**
(45) Veröffentlichungstag und Bekanntmachung des Hinweises auf die Patenterteilung: **25.04.2018**
(21) Anmeldenummer: 16158266.3
(22) Anmeldetag: 02.03.2016
(51) Int. Cl.: G05B 23/02, G05B 9/03, G05B 19/05

(54) **REDUNDANTES STEUERSYSTEM FÜR EINEN AKTOR UND VERFAHREN ZU SEINER REDUNDANTEN STEUERUNG**
REDUNDANT CONTROL SYSTEM FOR AN ACTUATOR AND METHOD FOR ITS REDUNDANT CONTROL
SYSTEME DE COMMANDE REDONDANT POUR UN ACTIONNEUR ET SON PROCEDE DE COMMANDE REDONDANT

(43) Veröffentlichungstag der Anmeldung: 06.09.2017
(73) Patentinhaber: Siemens Aktiengesellschaft, 80333 München (DE)
(72) Erfinder: Maier, Willi, 77728 Oppenau (DE); Rottmann, Norbert, 76829 Landau (DE)

(56) Entgegenhaltungen:
- EP-A1- 2 799 947
- EP-A1- 2 806 316
- EP-A1- 2 860 598
- EP-A2- 0 478 288
- WO-A1-2005/057306

## Beschreibung

Die Erfindung betrifft ein redundantes Steuersystem gemäß dem Oberbegriff des Anspruchs 1.

Die Erfindung betrifft ferner ein Verfahren zur redundanten Steuerung eines Aktors entsprechend dem Oberbegriff des Anspruchs 5.

Ein derartiges Steuersystem und Verfahren sind aus der WO 2005/057306 A1 bekannt.

Prozessleitsysteme wie z. B. SIMATIC PCS 7 von Siemens dienen zur Automatisierung von Prozessen in technischen Anlagen und sind üblicherweise hierarchisch durch mehrere Ebenen strukturiert. Auf der Feldebene werden mittels Feldgeräten die Zustände des technischen Prozesses erfasst (Sensoren) bzw. der Prozess gezielt beeinflusst (Aktoren). In der Steuerungsebene führen Steuerrechner (speicherprogrammierbare Steuerungen mit CPU-Einheiten) feldnahe Steuerungs- und Regelungsfunktionen aus, wobei sie Eingabewerte von den Sensoren, z. B. einem Druckmessumformer, empfangen und Ausgabewerte an die Aktoren, z. B. einen Stellungsregler für ein Regelventil, abgeben. Auf der Prozessführungsebene findet in Leitrechnern die übergeordnete Steuerung und Regelung des Prozesses statt.

Der Datenaustausch zwischen den Feldgeräten und den Steuerrechnern erfolgt üblicherweise über einen digitalen Feldbus, wie z. B. PROFIBUS DP oder PROFINET. Da die Feldgeräte normalerweise selbst keinen entsprechenden Feldbusanschluss aufweisen, werden sie über dezentrale Peripheriestationen an den Feldbus angebunden. Eine Peripheriestation besteht aus einem Interfacemodul (Kopfbaugruppe) zum Anschluss an den Feldbus und einer Anzahl von Peripheriebaugruppen (digitale und analoge Ein- und Ausgabebaugruppen) zum Anschluss der Feldgeräte. Die Peripheriebaugruppen können einen oder mehrere Kanäle aufweisen, an denen jeweils ein Feldgerät angeschlossen werden kann.

Ein hochverfügbares System, wie es beispielsweise aus der eingangs erwähnten WO 2005/057306 A1 oder der DE 10 2004 034 451 A1 bekannt ist, besitzt redundant ausgelegte zentrale Funktionen und ist mit zwei getrennten Steuerrechnern aufgebaut. Beim so genannten "Hot Stand By"-Betrieb arbeiten die beiden Steuerrechner im ungestörten Fall gleichzeitig dasselbe Steuerprogramm ab, wobei jedoch nur ein Steuerrechner aktiv ist und mit seinen Ausgabewerten den Prozess steuert. Im Fehlerfall übernimmt der intakte Steuerrechner allein die Steuerung des Prozesses. Die Ausgabewerte der beiden Steuerrechner werden dem Aktor über separate Ausgangsbaugruppen zugeführt, wobei, wie die DE 10 2004 034 451 A1 zeigt, Entkopplungsdioden an den Signalausgängen der Ausgangsbaugruppen im Falle eine ODER-Verknüpfung digitaler Ausgabewerte bzw. eine Addition analoger Ausgabewerte bewirken. Zum Austausch von Informationen, z. B. in Form von Status- und Abgleichinformationen, ist eine Redundanzkopplung vorgesehen, über welche die Steuerrechner miteinander verbunden sind.

Bei dem aus der WO 2005/057306 A1 bekannten redundanten Steuersystem ist der erste Steuerrechner über einen ersten Bus mit einem Interfacemodul einer ersten Peripheriestation, z. B. ET200M von Siemens, verbunden, welche mindestens eine Peripheriebaugruppe enthält. Der zweite redundante Steuerrechner ist über einen zweiten Bus mit einem Interfacemodul einer zweiten Peripheriestation verbunden, die ebenfalls mindestens eine Peripheriebaugruppe enthält. Der Aktor ist an Signalausgängen von zwei Peripheriebaugruppen angeordnet, die Ausgabebaugruppen bilden und in unterschiedlichen Peripheriestationen angeordnet sind. Jedes der Interfacemodule der beiden Peripheriestationen ist dazu ausgebildet, über den Bus von dem jeweiligen Steuerrechner für den Aktor erhaltene Ausgabewerte an die jeweilige Ausgabebaugruppe zur Ausgabe an den Aktor zu übergeben. Jede der Ausgabebaugruppen ist dazu ausgebildet, eine Störung an ihrem Signalausgang zu erkennen und dem Steuerrechner anzuzeigen, um eine Umschaltung auf die ungestörte Peripherieeinheit zu ermöglichen.

Die EP 0 478 288 A2 offenbart ein redundantes Automatisierungssystem für einen Aktor, der an voneinander entkoppelten Signalausgängen von zwei Ausgabebaugruppen angeschlossen ist. Beide Ausgabebaugruppen sind über einen gemeinsamen Bus mit zwei redundanten Steuerrechnern verbunden.

Aus der EP 2 806 316 A1 ist ein redundantes Automatisierungssystem für einen Sensor bekannt, der redundant an zwei in unterschiedlichen Peripheriestationen angeordneten Peripheriebaugruppen angeschlossen ist. Beide Peripheriestationen enthalten jeweils ein Interfacemodul, mit dem sie über einen gemeinsamen Bus an einem Automatisierungsgerät angeschlossen sind.

Aus der EP 2 799 947 A1 ist eine Anordnung mit einer Redundanz-Adaptereinheit bekannt, um ein Feldgerät, z. B. Aktor, redundant an zwei in unterschiedlichen Peripheriestationen angeordneten Peripheriebaugruppen anzuschließen.

Aus der EP 2 860 598 A1 ist ein redundantes Automatisierungssystem für Sensoren und Aktoren bekannt, die an einer Peripheriestation angeschlossen sind. Die Peripheriestation ist über einen Bus an zwei Teilsystemen, z. B. Automatisierungsgeräte, angeschlossen, die, wie auch aus der oben genannten DE 10 2004 034 451 A1 oder WO 2005/057306 A1 bekannt, zyklisch und synchron dasselbe Steuerprogramm abarbeiten und dazu über eine Synchronisationsverbindung miteinander verbunden sind. Auch hier ist nur ein Teilsystem aktiv, wobei im Fehlerfall auf das andere Teilsystem umgeschaltet wird. Damit sich die Umschaltung nicht störend auf den zu steuernden Prozess auswirkt, darf an den Ausgängen der angeschlossenen Peripherie eine Totzeit auftreten, während der die Ausgänge auf ihren zuletzt gültigen Prozessausgangswerten verharren.

Ein Problem für den Redundanzbetrieb ergibt sich durch die Festlegung einer bestimmten Reaktion des Systems, wenn eine der Ausgabebaugruppe vorgelagerte Einrichtung wie z. B. der Steuerrechner oder der Feldbus gestört ist oder ausfällt. In einem PCS7-System werden eine solche feldbusseitige Störung bzw. ein solcher Ausfall von dem Interfacemodule der Peripheriestation detektiert, um in der Folge alle Ausgabebaugruppen der Peripheriestation mittels eines Befehls (Kommando "Output Disable") dazu zu veranlassen, die zuletzt erhaltenen Ausgabewerte einzufrieren. Dies führt bei dem oben beschriebenen Redundanzbetrieb mit zwei Steuerrechnern und zwei dezentralen Peripheriestationen dazu, dass bei einer Störung des bis dahin aktiven Steuerrechners der von ihm zuletzt ausgegebene Ausgabewert an dem Signalausgang der nachgeordneten Ausgangsbaugruppe gehalten wird, während die dem bisher inaktiven und jetzt aktiven Steuerrechner nachgeordnete Ausgangsbaugruppe die aktuellen Ausgabewerte ausgibt. Bei der Analogausgabe erhält der Aktor dann die Summe aus dem eingefrorenen und dem aktuellen Ausgabewert und bei der Digitalausgabe im ungünstigen Fall dauerhaft der logischen Wert "eins". Der festgelegte Reaktionsmechanismus führt daher zu einem kompletten Redundanzausfall.

Eine Möglichkeit zur Lösung des Problems besteht darin, in jeder der beiden Peripheriestationen eine zusätzliche Digitalausgabebaugruppen als Hilfsbaugruppe anzuordnen, die bei Erhalt des Befehls "Output Disable" ein externes Schaltrelais ansteuert, um die für den Redundanzbetrieb vorgesehene Ausgabebaugruppe von der Stromversorgung abzuschalten. Dadurch wird der Signalausgang der Ausgabebaugruppe zwangsweise in einen strom- und spannungslosen Zustand gebracht, welcher den von der anderen redundanten Ausgabebaugruppe gelieferten Ausgabewert über die ODER-Verknüpfung nicht beeinflussen kann.

Zwar wird das Problem mit dieser Maßnahme, wenn auch mit erhöhtem Aufwand, gelöst, jedoch ergibt sich als Nachteil, dass sich die redundanten Ausgabebaugruppen bei Wegnahme ihrer Stromversorgung relativ lange unkontrollierbar und undefiniert verhalten, so dass eine schnelle Umschaltung auf die jeweils andere redundante Ausgangsbaugruppe nicht möglich ist.

Gemäß der Erfindung wird das oben geschilderte Problem aufwandsarm durch das in Anspruch 1 angegebene redundante Steuersystem und das in Anspruch 5 angegebene Verfahren gelöst, die beide jeweils auch eine schnelle Umschaltung zwischen den redundanten Ausgangsbaugruppen ermöglichen.

Gegenstand der Erfindung ist somit ein redundantes Steuersystem
- mit einem Aktor,
- mit einem ersten Steuerrechner, der über einen ersten Bus mit einem Interfacemodul einer ersten Peripheriestation verbunden ist, welche mindestens eine Peripheriebaugruppe enthält, und
- mit einem zweiten redundanten Steuerrechner, der über einen zweiten Bus mit einem Interfacemodul einer zweiten Peripheriestation verbunden ist, die ebenfalls mindestens eine Peripheriebaugruppe enthält, wobei
   - der Aktor an voneinander entkoppelten Signalausgängen von zwei jeweils eine Ausgabebaugruppe bildenden Peripheriebaugruppen der beiden Peripheriestationen angeschlossen ist und
   - jedes der Interfacemodule dazu ausgebildet ist, über den Bus von dem jeweiligen Steuerrechner für den Aktor erhaltene Ausgabewerte an die Ausgabebaugruppe zur Ausgabe an den Aktor zu übergeben
   dadurch gekennzeichnet, dass
   - jedes der Interfacemodule ferner dazu ausgebildet ist, bei Detektion einer busseitigen Störung an die Ausgabebaugruppe und an alle weiteren Ausgabebaugruppen der Peripheriestation einen Befehl zur Ausgabe von Ersatzwerten an ihren Signalausgängen zu übermitteln, und
   - die beiden Ausgabebaugruppen, an deren Signalausgängen der Aktor angeschlossen ist, über eine Kommunikationsverbindung miteinander verbunden und dazu ausgebildet sind, Informationen über den Erhalt eines Befehls zur Ausgabe eines Ersatzwertes auszutauschen und diesen Befehl nur dann umzusetzen, wenn die jeweils andere Ausgabebaugruppe ebenfalls einen solchen Befehl erhalten hat.

Gegenstand der Erfindung ist ferner ein Verfahren zur redundanten Steuerung eines Aktors in einem Steuersystem, in dem
- ein erster Steuerrechner über einen ersten Bus mit einem Interfacemodul einer ersten Peripheriestation verbunden ist, welche mindestens eine Peripheriebaugruppe enthält,
- ein zweiter redundanter Steuerrechner über einen zweiten Bus mit einem Interfacemodul einer zweiten Peripheriestation verbunden ist, die ebenfalls mindestens eine Peripheriebaugruppe enthält, und
- der Aktor an voneinander entkoppelten Signalausgängen von zwei jeweils eine Ausgabebaugruppe bildenden Peripheriebaugruppen der beiden Peripheriestationen angeschlossen ist, wobei
   - jedes der Interfacemodule über den Bus von dem jeweiligen Steuerrechner für den Aktor erhaltene Ausgabewerte an die Ausgabebaugruppe zur Ausgabe an den Aktor übergibt,
   dadurch gekennzeichnet, dass
   - jedes der Interfacemodule bei Detektion einer busseitigen Störung an die Ausgabebaugruppe und an alle weiteren Ausgabebaugruppen der Peripheriestation einen Befehl zur Ausgabe von Ersatzwerten an ihren Signalausgängen übermittelt, und
- die beiden Ausgabebaugruppen an deren Signalausgängen der Aktor angeschlossen ist, über eine Kommunikationsverbindung Informationen über den Erhalt eines Befehls zur Ausgabe eines Ersatzwertes austauschen und diesen Befehl nur dann umzusetzen, wenn auch die jeweils andere Ausgabebaugruppe einen solchen Befehl erhalten hat.

Bei dem Ersatzwert kann es sich insbesondere um den zuletzt erhaltenen Ausgabewert, aber auch um einen anderen, von den betriebsmäßigen Ausgabewerten unterscheidbaren parametrierbaren Wert handeln.

Bei den Ausgabebaugruppen des erfindungsgemäßen redundanten Steuersystems kann es sich gleichermaßen um digitale oder analoge Ausgabebaugruppen handeln.

Für den Fall, dass die beiden redundanten Ausgabebaugruppen mehrkanalig aufgebaut sind, gilt die Einschränkung, einen Befehl zur Ausgabe eines Ersatzwertes nur dann umzusetzen, wenn die jeweils andere Ausgabebaugruppe ebenfalls einen solchen Befehl erhalten hat, nur für die Kanäle, an denen der Aktor über die Dioden angeschlossen ist.

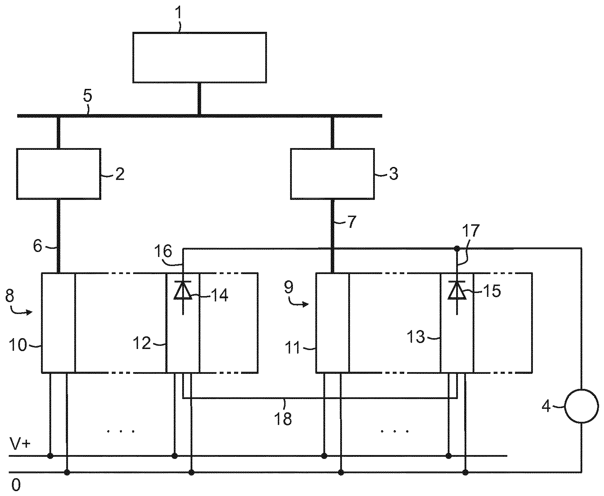

Zur weiteren Erläuterung der Erfindung wird im Folgenden auf die einzige Figur der Zeichnung Bezug genommen, die in schematischer Blockdarstellung ein Ausführungsbeispiel des erfindungsgemäßen redundanten Steuersystems zeigt.

Dargestellt ist ein Ausschnitt aus einem Prozessleitsystem mit einer Leiteinrichtung 1 in einer Prozessführungsebene, einem ersten und zweiten Steuerrechner 2, 3 in Form von speicherprogrammierbaren Steuerungen in einer Steuerungsebene sowie einem Aktor 4 auf Feldebene. Die Feldebene enthält weitere, hier nicht gezeigte Feldgeräte, die in Form von Sensoren die Zustände eines technischen Prozesses erfassen und als Aktoren ausgebildet den Prozess gezielt beeinflussen. Die Leiteinrichtung 1 und die Steuerrechner 2, 3 sind über einen Anlagenbus 5 (z. B. Ethernet) miteinander verbunden. Zur Erzeugung von Ausgabewerten für den Aktor 4 arbeiten die beiden Steuerrechner 2, 3 im Redundanzbetrieb jeweils ein und dasselbe Steuer- oder Anwenderprogramm ab, wobei sie u. a. über separate digitale Feldbusse 6, 7 (z. B. PROFIBUS DP) erhaltene Eingabewerte von Sensoren verarbeiten. Die Anbindung der Feldgeräte an die Feldbusse 6, 7 der beiden Steuerrechner 2, 3 erfolgt durch eine erste und eine zweite dezentrale Peripheriestation 8, 9. Jede der beiden Peripheriestationen 8, 9 besteht aus einem Interfacemodul (Kopfbaugruppe) 10, 11 zum Anschluss an den jeweiligen Feldbus 6, 7 und einer Anzahl von ein- oder mehrkanaligen Peripheriebaugruppen, von denen hier nur jeweils eine Ausgabebaugruppe 12, 13 dargestellt ist. Der Aktor 4 ist über Entkopplungsdioden 14, 15 an den Signalausgängen 16, 17 der beiden Ausgabebaugruppen 12, 13 angeschlossen. Die Interfacemodule 10, 11 übergeben Ausgabewerte, die sie von dem jeweiligen Steuerrechner 2, 3 für den Aktor 4 erhalten, an die Ausgabebaugruppe 12, 13, wobei die Dioden 14, 15 für den Aktor 4 digitale Werte disjunktiv (ODER) verknüpfen und analoge Werte (Ströme) addieren. Beide Ausgabebaugruppen 12, 13 sind aktiv. Sie erhalten im fehlerfreien Redundanzbetrieb beide dieselben Ausgabewerte. Die beiden Steuerrechner 2, 3 gleichen sich selbst entsprechend ab.

Die Interfacemodule 10, 11 überwachen jeweils den Feldbus 6, 7, an den sie angeschlossen sind, und geben im Falle einer Störung, z. B. bei Ausfall des Steuerrechners (z. B. Betriebszustand STOPP, Kabel gezogen, usw.) an alle Ausgabebaugruppen der betreffenden Peripheriestation 8, 9 einen Befehl zur Ausgabe von Ersatzwerten, beispielsweise in Form der zuletzt erhaltenen Ausgabewerte. Dieses Verhalten ist im nicht redundanten Betrieb notwendig. Im redundanten Betrieb führt dies jedoch zu einem fehlerhaften Betriebszustand. Die den Aktor 4 redundant mit Ausgabewerten versorgenden Ausgabebaugruppe 12, 13 setzen daher diesen Befehl nur dann um, wenn und solange sie beide einen solchen Befehl erhalten. Um dies zu ermöglichen, tauschen sie über eine Kommunikationsverbindung (z. B. RS485) Informationen über den Erhalt eines Befehls zur Ausgabe eines Ersatzwertes aus. Dadurch wird verhindert, dass der Aktor 4 z. B. anstelle eines aktuellen analogen Ausgabewertes die Summe aus diesem und einem auf den Befehl hin eingefrorenen Ausgabewert erhält.

## Patentansprüche

1. Redundantes Steuersystem
- mit einem Aktor (4),
- mit einem ersten Steuerrechner (2), der über einen ersten Bus (6) mit einem Interfacemodul (10) einer ersten Peripheriestation (8) verbunden ist, welche mindestens eine Peripheriebaugruppe enthält, und
- mit einem zweiten redundanten Steuerrechner (3), der über einen zweiten Bus (7) mit einem Interfacemodul (11) einer zweiten Peripheriestation (9) verbunden ist, die ebenfalls mindestens eine Peripheriebaugruppe enthält, wobei
- der Aktor (4) an voneinander entkoppelten Signalausgängen (16, 17) von zwei jeweils eine Ausgabebaugruppe (12, 13) bildenden Peripheriebaugruppen der beiden Peripheriestationen (8, 9) angeschlossen ist und
- jedes der Interfacemodule (10, 11) dazu ausgebildet ist, über den Bus (6, 7) von dem jeweiligen Steuerrechner (2, 3) für den Aktor (4) erhaltene Ausgabewerte an die Ausgabebaugruppe (12, 13) zur Ausgabe an den Aktor (4) zu übergeben,
**dadurch gekennzeichnet, dass**
- jedes der Interfacemodule (10, 11) ferner dazu ausgebildet ist, bei Detektion einer busseitigen Störung an die Ausgabebaugruppe (12, 13) und an alle weiteren Ausgabebaugruppen der Peripheriestation (8, 9) einen Befehl zur Ausgabe von Ersatzwerten an ihren Signalausgängen (16, 17) zu übermitteln, und
- die beiden Ausgabebaugruppen (12, 13), an deren Signalausgängen (16, 17) der Aktor (4) angeschlossen ist, über eine Kommunikationsverbindung (18) miteinander verbunden und dazu ausgebildet sind, Informationen über den Erhalt eines Befehls zur Ausgabe eines Ersatzwertes auszutauschen und diesen Befehl nur dann umzusetzen, wenn die jeweils andere Ausgabebaugruppe ebenfalls einen solchen Befehl erhalten hat.

2. Redundantes Steuersystem nach Anspruch 1, **dadurch gekennzeichnet, dass** die beiden Ausgabebaugruppen (12, 13) digitale Ausgabebaugruppen sind.

3. Redundantes Steuersystem nach Anspruch 1, **dadurch gekennzeichnet, dass** die beiden Ausgabebaugruppen (12, 13) analoge Ausgabebaugruppen sind.

4. Redundantes Steuersystem nach einem der vorangehenden Ansprüche, **dadurch gekennzeichnet, dass** bei mehrkanaligem Aufbau der Ausgabebaugruppen (12, 13) diese dazu ausgebildet sind, einen zur Ausgabe eines Ersatzwertes erhaltenen Befehl nur für die Kanäle, an deren Signalausgängen der Aktor (4) angeschlossen ist, mit der Einschränkung umzusetzen, dass auch die andere Ausgabebaugruppe einen solchen Befehl erhalten hat.

5. Verfahren zur redundanten Steuerung eines Aktors (4) in einem Steuersystem, in dem
- ein erster Steuerrechner (2) über einen ersten Bus (6) mit einem Interfacemodul (10) einer ersten Peripheriestation (8) verbunden ist, welche mindestens eine Peripheriebaugruppe enthält,
- ein zweiter redundanter Steuerrechner (3) über einen zweiten Bus (7) mit einem Interfacemodul (11) einer zweiten Peripheriestation (9) verbunden ist, die ebenfalls mindestens eine Peripheriebaugruppe enthält, und
- der Aktor (4) an voneinander entkoppelten Signalausgängen (16, 17) von zwei jeweils eine Ausgabebaugruppe (12, 13) bildenden Peripheriebaugruppen der beiden Peripheriestationen (8, 9) angeschlossen ist, wobei
- jedes der Interfacemodule (10, 11) über den Bus (6, 7) von dem jeweiligen Steuerrechner (2, 3) für den Aktor (4) erhaltene Ausgabewerte an die Ausgabebaugruppe (12, 13) zur Ausgabe an den Aktor (4) übergibt,
**dadurch gekennzeichnet, dass**
- jedes der Interfacemodule (10, 11) bei Detektion einer busseitigen Störung an die Ausgabebaugruppe (12, 13) und an alle weiteren Ausgabebaugruppen der Peripheriestation (8, 9) einen Befehl zur Ausgabe von Ersatzwerten an ihren Signalausgängen (16, 17) übermittelt, und
- die beiden Ausgabebaugruppen (12, 13), an deren Signalausgängen (16, 17) der Aktor (4) angeschlossen ist, über eine Kommunikationsverbindung (18) Informationen über den Erhalt eines Befehls zur Ausgabe eines Ersatzwertes austauschen und diesen Befehl nur dann umsetzen, wenn auch die jeweils andere Ausgabebaugruppe einen solchen Befehl erhalten hat.

6. Verfahren nach Anspruch 5, **dadurch gekennzeichnet, dass** bei mehrkanaligem Aufbau der Ausgabebaugruppen (12, 13) diese einen zur Ausgabe eines Ersatzwertes erhaltenen Befehl nur für die Kanäle, an deren Signalausgängen der Aktor (4) angeschlossen ist, mit der Einschränkung umsetzen, dass auch die andere Ausgabebaugruppe einen solchen Befehl erhalten hat.

## Claims

1. Redundant control system
- with an actuator (4),
- with a first control computer (2) which is connected by way of a first bus (6) to an interface module (10) of a first peripheral station (8) containing at least one periphery module, and
- with a second redundant control computer (3) which is connected by way of a second bus (7) to an interface module (11) of a second peripheral station (9) likewise containing at least one periphery module, wherein
- the actuator (4) is connected to mutually decoupled signal outputs (16, 17) of two periphery modules, each forming an output module (12, 13), of the two peripheral stations (8, 9),
- each of the interface modules (10, 11) is designed to transmit output values received for the actuator (4) from the respective control computer (2, 3) by way of the bus (6, 7) to the output module (12, 13) for output to the actuator (4),
**characterised in that**
- on detection of a fault on the part of the bus, each of the interface modules (10, 11) is furthermore designed to transmit a command to the output module (12, 13) and all other output modules of the peripheral station (8, 9) to output substitute values at their signal outputs (16, 17), and
- the two output modules (12, 13) with signal outputs (16, 17) to which the actuator (4) is connected are interlinked by way of a communication link (18) and are designed to exchange information about the receipt of a command for the output of a substitute value and to implement this command only if the other output module concerned has also received such a command.

2. Redundant control system according to claim 1, **characterised in that** the two output modules (12, 13) are digital output modules.

3. Redundant control system according to claim 1, **characterised in that** the two output modules (12, 13) are analogue output modules.

4. Redundant control system according to one of the preceding claims, **characterised in that** if the output modules (12, 13) are multichannel in design, they are designed to implement a command received for the output of a substitute value only for those channels with signal outputs to which the actuator (4) is connected, with the restriction that the other output module has also received such a command.

5. Method for the redundant control of an actuator (4) in a control system, in which
- a first control computer (2) is connected by way of a first bus (6) to an interface module (10) of a first peripheral station (8) containing at least one periphery module,
- a second redundant control computer (3) is connected by way of a second bus (7) to an interface module (11) of a second peripheral station (9) likewise containing at least one periphery module, and
- the actuator (4) is connected to mutually decoupled signal outputs (16, 17) of two periphery modules, each forming an output module (12, 13), of the two peripheral stations (8, 9), wherein
- each of the interface modules (10, 11) transmits output values for the actuator (4) received from the respective control computer (2, 3) by way of the bus (6, 7) to the output module (12, 13) for output to the actuator (4),
**characterised in that**
- on detection of a fault on the part of the bus, each of the interface modules (10, 11) transmits a command to the output module (12, 13) and all other output modules of the peripheral station (8, 9) to output substitute values to their signal outputs (16, 17), and
- the two output modules (12, 13) with signal outputs (16, 17) to which the actuator (4) is connected exchange information about the receipt of a command for the output of a substitute value by way of a communication link (18) and implement this command only if the other output module concerned has also received such a command.

6. Method according to claim 5, **characterised in that** if the output modules (12, 13) are multichannel in design, they are designed to implement a command received for the output of a substitute value only for those channels with signal outputs to which the actuator (4) is connected, with the restriction that the other output module has also received such a command.

## Revendications

1. Système de commande redondant
- comprenant un actionneur (4),
- comprenant un premier ordinateur (2) de commande, qui est relié par un premier bus (6 ) à un module (10) d'interface d'un premier poste (8) périphérique, comportant au moins un module périphérique et
- comprenant un deuxième ordinateur (3) de commande redondant, qui est relié par un deuxième bus (7) à un module (11) d'interface d'un deuxième poste (9) périphérique, comportant également au moins un module périphérique, dans lequel
- l'actionneur (4) est raccordé à des sorties (16, 17) de signal, découplées l'une de l'autre, de deux modules périphériques, formant chacun un module (12, 13) de sortie des deux postes (8, 9) périphériques et
- chacun des modules (10, 11) d'interface est constitué pour transmettre, au module (12, 13) de sortie pour sortie vers l'actionneur (4), par l'intermédiaire des bus (6, 7), des valeurs de sortie obtenues de l'ordinateur (2, 3) de commande respectif,
**caractérisé en ce que**
- chacun des modules (10, 11) d'interface est constitué en outre pour, si une panne du côté du bus est détectée, transmettre aux modules (12, 13) de sortie et à tous les autres modules de sortie des postes (8, 9) périphériques, une instruction de sortir des valeurs de remplacement sur leurs sorties (16, 17) de signal.
- les deux modules (12, 13) de sortie, aux sorties (16, 17) de signal desquelles est raccordé l'actionneur (4), sont reliés entre eux par une liaison (18) de communication et sont constitués pour échanger, pour la sortie d'une valeur de remplacement, des informations sur le contenu d'une instruction et pour ne suivre cette instruction que si l'autre module de sortie a reçu également une instruction de ce genre.

2. Système de commande redondant suivant la revendication 1, **caractérisé en ce que** les deux modules (12, 13) de sortie sont des modules de sortie numériques.

3. Système de commande redondant suivant la revendication 1, **caractérisé en ce que** les deux modules (12, 13) de sortie sont des modules de sortie analogiques.

4. Système de commande redondant suivant l'une des revendications précédentes, **caractérisé en ce que**, dans une structure à plusieurs canaux des modules (12, 13) de sortie, ceux-ci sont constitués pour suivre une instruction reçue de sortir une valeur de remplacement seulement pour les canaux, aux sorties de signal desquelles l'actionneur (4) est raccordé, avec la limitation que l'autre module de sortie a reçu aussi une instruction de ce genre.

5. Procédé de commande redondante d'un actionneur (4) dans un système de commande, dans lequel
- un premier ordinateur (2) de commande est relié, par un premier bus (6), à un module (10) d'interface d'un premier poste (8) périphérique comportant au moins un module périphérique,
- un deuxième ordinateur (3) de commande redondant est relié, par un deuxième bus (7) à un module (11) d'interface d'un deuxième poste (9) périphérique comportant également au moins un module périphérique et
- l'actionneur (4) est raccordé à des sorties (16, 17) de signal, découplées l'une de l'autre, de deux modules périphériques, formant chacun un module (12, 13) de sortie des deux postes (8, 9) périphériques, dans lequel
- chacun des modules (10, 11) d'interface transmet, par le bus (6, 7) de l'ordinateur (2, 3) de commande respectif, des valeurs de sortie reçues par l'actionneur (4) aux modules (12, 13) de sortie pour sortie vers l'actionneur (4),
**caractérisé en ce que**
- chacun des modules (10, 11) d'interface transmet, lorsqu'une panne du côté du bus est détectée, aux modules (12, 13) de sortie et à tous les autres modules de sortie du poste (8, 9) périphérique, une instruction de sortir des valeurs de remplacement sur leurs sorties (16, 17) de signal et
- les deux modules (12, 13) de sortie, aux sorties (16, 17) de signal desquelles l'actionneur (4) est raccordé, échangent, par une liaison (18) de communication, des informations sur la réception d'une instruction de sortie d'une valeur de remplacement et ne suivent cette instruction que si l'autre module de sortie a reçu aussi une instruction de ce genre.

6. Procédé suivant la revendication 5, **caractérisé en ce que**, pour une constitution à plusieurs canaux des modules (12, 13) de sortie, ceux-ci ne suivent une instruction reçue de sortir une valeur de remplacement que pour les canaux, aux sorties de signal desquelles l'actionneur (4) est raccordé, avec la limitation que l'autre module de sortie a reçu aussi une instruction de ce genre.
